# DEMANDE DE BREVET EUROPEEN

(11) **EP 1 477 836 A1**
(43) Date de publication de la demande: **17.11.2004**
(21) Numéro de dépôt: 04290852.5
(22) Date de dépôt: 31.03.2004
(51) Int. Cl.: G02B 6/44

(54) **Câble à fibres optiques nues mécaniquement couplées par contact direct à un élément central de renforcement**

(30) Priorité: 25.04.2003 FR 0305094
(71) Demandeur: ALCATEL, 75008 Paris (FR)
(72) Inventeur: Bourget, Vincent, 78160 Marly le Roi (FR)
(74) Mandataire: Blokland, Arie

(57) **Abrégé**

L'invention concerne le domaine des câbles à fibres optiques, et plus particulièrement le domaine des câbles à fibres optiques bas coût.

C'est un câble à fibres optiques comportant un élément central de renforcement (1), plusieurs fibres optiques (4) entourant l'élément central de renforcement (1), les fibres optiques (4) nues étant plaquées en contact contre l'élément central de renforcement (1) de manière à être mécaniquement couplées à l'élément central de renforcement (1).

Le câble à fibres optiques selon l'invention peut notamment être utilisé comme câble de distribution ou comme d'accès dans les réseaux locaux.

## Description

L'invention concerne le domaine des câbles à fibres optiques, et plus particulièrement le domaine des câbles à fibres optiques bas coût. Ce domaine des câbles bas coût requiert des câbles à fibres optiques ayant un prix de revient relativement faible mais présentant des propriétés décentes dans un environnement de contraintes toutefois modérées. Ce type de câble à fibres optiques bas coût devra préserver des propriétés de transmission optique correctes dans un environnement à température relativement basse, et résister à un certain seuil d'écrasement radial comme à un certain seuil de traction longitudinale. Par contre, ce type de câble bas coût ne sera pas adapté à des environnements à températures très basses ou à contraintes mécaniques très élevées, à moins que des propriétés de transmission optique nettement dégradées soient admissibles par le système de transmission optique envisagé utilisant le câble. L'application préférentielle visée par l'invention pour ce type de câble à fibres optiques bas coût est une utilisation au niveau des réseaux locaux. Dans un réseau local, la capacité demandée en nombre de fibres optiques est généralement relativement faible mais la taille des conduites dans lesquelles les câbles sont destinés à être installés l'est également souvent. Le type de câble bas coût visé par l'invention sera préférentiellement un câble à faible capacité de fibres optiques qui présente un diamètre extérieur qui soit relativement petit. Sauf mention contraire, dans la suite du texte, le diamètre sans autre précision sera toujours considéré comme le diamètre extérieur.

Selon un premier art antérieur, il est connu des structures de câbles à fibres optiques utilisant des éléments appelés « loose tubes » qui sont des tubes rigides incluant les fibres optiques baignant dans une gelée et possédant une certaine liberté de mouvement à l'intérieur de ces tubes rigides. Le module d'élasticité, encore appelé « module d'Young », est nettement plus élevé pour les fibres optiques, généralement en silice, que pour les tubes rigides, généralement en plastique. Les fibres optiques doivent pouvoir faire face aux variations dimensionnelles des tubes rigides. Pour faire face à une extension longitudinale par exemple provoquée par une traction exercée sur le câble, les fibres optiques présentent généralement une surlongueur. Pour faire face à une contraction longitudinale par exemple provoquée par une baisse de température du câble, surtout lorsque les fibres optiques présentent déjà une surlongueur par rapport aux tubes rigides, les fibres optiques doivent disposer de beaucoup de place dans les tubes rigides ce qui augmente le diamètre de ceux-ci, amenant vite des diamètres de câble correspondant qui sont élevés, ce qui donne des câbles volumineux donc coûteux et difficilement susceptibles d'être « soufflés » dans des conduites de petit diamètre. La structure de l'art antérieur à « loose tube » n'est donc pas adaptée. Les tubes rigides sont généralement disposés autour d'un élément de renfort central. Un tel art antérieur est par exemple décrit dans la demande de brevet européen EP320069. Un tel art antérieur est également présenté à la figure 5 du brevet américain US6463199 avec une variante consistant à remplacer la gelée contenue dans les tubes rigides par un matériau solide et souple à la fois tout en permettant un certain mouvement des fibres optiques dans les tubes rigides. L'utilisation de plusieurs tubes rigides comprenant chacun plusieurs fibres optiques amène également des diamètres de câble trop importants. De plus, des tubes rigides à très petit diamètre présenteront de manière générale des problèmes de pliure et des problèmes de commodité d'injection de la matière de remplissage, que ce soit une graisse, une gelée ou autre chose, enrobant les fibres optiques incluses dans les tubes rigides.

Selon un second art antérieur, il est connu des structures de câbles à fibres optiques utilisant plusieurs renforts latéraux disposés symétriquement et noyés dans la gaine extérieure du câble. Un tel art antérieur est par exemple présenté à la figure 4 du brevet américain US6463199. Si ces renforts latéraux ont un faible diamètre, ils n'ont pas un effet suffisant pour aider à eux seuls les fibres optiques à faire face aux variations dimensionnelles du câble. Si, par contre, ces renforts latéraux ont un diamètre suffisamment important, les diamètres des deux renforts latéraux symétriques auxquels s'ajoutent les deux surépaisseurs de la gaine extérieure pour y assurer leur maintien, amènent un diamètre extérieur de câble qui devient trop important.

Par conséquent, l'invention s'est penchée sur le problème de câbles à fibres optiques bas coût et faible capacité présentant aussi un petit diamètre. Pour cela, les structures de câble considérées ont exclu les tubes rigides appelés « loose tubes » contenant des fibres optiques possédant une liberté de mouvement à l'intérieur desdits tubes rigides et ont exclu les renforts latéraux symétriques noyés dans la gaine extérieure lorsqu'ils présentent un diamètre important, des renforts latéraux symétriques à petit diamètre noyés dans la gaine extérieure n'étant pas exclus mais étant considérés comme insuffisants à eux seuls puisque alors un ou plusieurs autres renforts sont considérés comme nécessaires pour les raisons évoquées ci-dessus. L'invention propose une structure de câble à fibres optiques basée sur l'utilisation d'un élément central de renforcement auquel sont directement couplées mécaniquement par contact les fibres optiques nues. La structure est dite « serrée » car les fibres optiques ne sont pas libres de mouvement pour épouser les variations dimensionnelles longitudinales du câble puisqu'elles sont mécaniquement couplées à l'élément central de renforcement par contact avec celui-ci.

Selon l'invention, il est prévu un câble à fibres optiques comportant un élément central de renforcement, plusieurs fibres optiques entourant l'élément central de renforcement, caractérisé en ce que les fibres optiques nues sont plaquées en contact contre l'élément central de renforcement de manière à être mécaniquement couplées à l'élément central de renforcement.

Tout d'abord, une fibre optique nue se définit classiquement comme constituée d'une part d'un coeur et d'une gaine, guidant la lumière et constituant l'âme optique, et d'autre part d'un ou de plusieurs revêtements, ne guidant pas la lumière, classiquement deux revêtements, généralement appliqués, lors du fibrage de la fibre optique à partir de la préforme, autour de l'âme optique de la fibre optique. Des marques, notamment colorées, peuvent également être appliquées dans ou sur le revêtement ou bien dans et ou sur un ou plusieurs des revêtements de la fibre optique. La fibre optique présentant un coeur, une gaine, un ou plusieurs revêtements appliqués lors du fibrage, avec éventuellement un ou plusieurs marquages, constitue la fibre optique nue. La fibre optique nue a un diamètre usuellement normalisé à environ 250µm. Le diamètre de la fibre optique nue est en tous cas inférieur à 300µm. Les fibres optiques renforcées par une ou plusieurs couches de protection mécanique supplémentaires, ne sont pas des fibres optiques nues, leur diamètre est généralement nettement supérieur à 300µm, il vaut par exemple 900µm pour certaines fibres optiques renforcées. De même, l'ensemble constitué par un tube incluant une seule fibre optique noyée dans un matériau de remplissage ne saurait être considérée comme une fibre optique nue. Les fibres optiques nues sont de préférence des fibres optiques monomodes mais pourraient également être des fibres optiques multimodes.

Les fibres optiques ne sont pas nécessairement nues dans le câble, elles peuvent être partiellement enrobées d'un matériau tampon destiné à les protéger notamment de contraintes mécaniques. Cependant, en au moins une partie de la fibre optique nue, il y a contact entre la fibre optique nue et l'élément central de renforcement, donc l'élément central de renforcement touche une partie de la fibre optique nue, c'est-à-dire une partie du revêtement extérieur appliqué à la fibre optique lors du fibrage. Bien que le contact entre les fibres optiques nues et l'élément central de renforcement soit un contact direct, on considérera toutefois qu'une très légère couche d'enduit liquide ou visqueux appliquée sur l'élément central de renforcement et ou sur les fibres optiques nues lors de l'assemblage du câble afin de ne pas endommager les fibres optiques nues notamment lors d'un assemblage à grande vitesse, reste dans le cadre de l'invention définie par un contact entre l'élément central de renforcement et les fibres optiques nues à condition que les fibres optiques nues restent mécaniquement couplées à l'élément central de renforcement. Le couplage mécanique par contact est appelé couplage mécanique direct, au contraire d'un couplage mécanique indirect où il n'y a pas de contact du tout entre les fibres optiques nues et l'élément central de renforcement, car un ou plusieurs matériaux d'épaisseur importante séparent alors les fibres optiques nues de l'élément central de renforcement, comme dans le premier art antérieur par exemple. De plus, les fibres optiques étant plaquées contre l'élément central de renforcement, la majorité de l'enduit sera expulsée par pression entre la fibre optique nue et l'élément central de renforcement, et l'éventuelle couche d'enduit restante entre l'élément central de renforcement et la fibre optique nue à leur point de contact sera d'épaisseur très faible. Un contact direct, c'est-à-dire sans la moindre couche d'enduit liquide ou visqueux entre l'élément central de renforcement et les fibres optiques nues, est toutefois préféré, car il procure un meilleur couplage mécanique entre l'élément central de renforcement et les fibres optiques nues.

Les fibres optiques nues sont plaquées en contact contre l'élément central de renforcement, ce qui signifie que le contact de la fibre optique nue avec l'élément central de renforcement n'est pas un simple contact mais un contact avec une certaine pression de la fibre optique nue sur l'élément central de renforcement de manière à ce que la fibre optique soit mécaniquement couplée à l'élément central de renforcement lequel présente un comportement en contraction et en extension qui est comparable à celui de la fibre optique nue, par opposition au comportement des matériaux plastiques notamment comme ceux constituant les tubes rigides de type « loose tube ». Cette pression doit bien sûr rester suffisamment faible pour ne dégrader les propriétés de transmission de la fibre optique et notamment son atténuation, à moins que le système utilisant le câble selon l'invention n'autorise ou ne tolère une telle dégradation qui restera cependant toujours relativement faible. Un type d'élément central de renforcement avantageux décrit ultérieurement permet d'augmenter la pression des fibres optiques nues contre l'élément central de renforcement sans diminuer de manière sensible les propriétés de transmission des fibres optiques et en particulier leur atténuation. Ce plaquage des fibres optiques nues contre l'élément central de renforcement exclue une structure à jonc rainuré dans laquelle les fibres optiques ont un certain degré de liberté pour se mouvoir dans les cavités du jonc rainuré. Une telle structure à jonc rainuré est d'ailleurs également connue de l'art antérieur, elle se rapproche du principe de liberté de mouvement des fibres optiques dans les structures de type « loose tube » ; dans cette structure dite à « jonc rainuré », les fibres optiques ne sont pas mécaniquement couplées à l'élément central de renforcement qui est le jonc rainuré. Une structure en jonc rainuré avec des fibres optiques nues plaquées sur toute leur longueur contre le jonc rainuré de manière à ce qu'un couplage mécanique existe entre le jonc rainuré jouant alors le rôle de l'élément central de renforcement et les fibres optiques serait possible mais présenterait en pratique relativement peu d'intérêt dans la mesure où le diamètre du câble obtenu serait relativement important. Un tel câble pourrait ou non comporter une matière de remplissage entourant les fibres optiques situées dans les cavités du jonc rainuré, ladite matière de remplissage serait de préférence solide et souple, et ladite matière plaquerait les fibres optiques nues contre la paroi des cavités du jonc rainuré. Par ailleurs, une structure à jonc rainuré est une structure généralement coûteuse du fait de la forme complexe du jonc rainuré. De préférence, dans un plan de section transversale du câble, l'élément central de renforcement utilisé dans un câble selon l'invention présente une forme sensiblement circulaire et non pas une forme plus complexe comprenant des cavités comme celle d'un jonc rainuré.

Le couplage mécanique direct entre les fibres optiques et l'élément central de renforcement permet à l'élément central de renforcement d'aider les fibres optiques à mieux encaisser les variations dimensionnelles longitudinales du câble. Ce couplage mécanique direct étant obtenu par un contact tel que défini ci-dessus, les fibres optiques ne peuvent pas constituer une couronne à plusieurs couches concentriques autour de l'élément central de renforcement car toutes les fibres optiques de transmission situées autour de l'élément central de renforcement doivent être en contact avec l'élément central de renforcement. Les fibres optiques sont pour cela de préférence disposées en une couche unique autour de l'élément central de renforcement. Cette couche unique tout comme l'élément central de renforcement, présentent dans un plan de section transversale du câble, une forme extérieure avantageusement circulaire.

Selon l'invention, il est aussi prévu un câble à fibres optiques comportant un élément central de renforcement, une couche de fibres optiques entourant l'élément central de renforcement, une couche tampon entourant la couche de fibres optiques, une gaine extérieure entourant la couche tampon, caractérisé en ce que le câble ne comprend qu'une seule couche de fibres optiques entourant l'élément central de renforcement, en ce que la couche tampon plaque les fibres optiques nues en contact contre l'élément central de renforcement de manière à les coupler mécaniquement à l'élément central de renforcement, et en ce que la couche tampon est constituée, majoritairement en volume, d'un matériau à la fois solide et souple.

Le câble ne comprend ici qu'une seule et unique couche de fibres optiques entourant l'élément central de renforcement. Dans un plan de section transversale du câble, l'élément central de renforcement ayant généralement une forme circulaire, la couche de fibres optiques présentera également de manière générale une forme de couronne dont les diamètres intérieur et extérieur seront circulaires.

La couche tampon joue un rôle de tampon, c'est-à-dire de protection des fibres optiques, notamment contre les contraintes mécaniques exercées sur le câble par le milieu extérieur. Pour protéger les fibres optiques de façon optimale, la couche tampon pénètre de préférence au moins partiellement dans les interstices situés entre les fibres optiques. La couche tampon est constituée, majoritairement, en volume, d'un matériau à la fois solide et souple. La majorité du volume de la couche tampon est constituée par un seul et unique matériau qui est à la fois solide et souple. Dans le volume de la couche tampon, peuvent toutefois se trouver, en minorité, d'autres éléments comme par exemple des mèches de renfort qui sont en matériau solide et rigide mais qui ne se trouvent de préférence pas au contact direct des fibres optiques afin de ne pas dégrader leurs propriétés optiques, même légèrement. Le matériau est solide par opposition aux matériaux liquides de l'art antérieur, tels que graisse ou bien gelée visqueuse ou pâteuse. Le matériau solide permet de maintenir une certaine intégrité de la disposition ordonnée de la structure de la couche de fibres optiques. Le matériau est souple par opposition aux matériaux rigides de l'art antérieur tels que tubes rigides de type « loose tube » ou éléments de renforcement. De manière un peu plus quantitative, alors qu'un matériau rigide de type « loose tube » aura un module d'élasticité relativement élevé, par exemple environ 2400 MPa, qu'un matériau de gaine de type LDPE ou de type HDPE aura un module d'élasticité valant respectivement environ 250 MPa ou environ 550 MPa, le matériau souple utilisé comme matériau tampon aura un module d'élasticité de préférence inférieur à 150 Mpa, voire même inférieur à 100 MPa, et avantageusement compris entre 30 et 50 MPa, toutes les unités en MPa des modules d'élasticité (encore appelés modules d'Young) qui précèdent étant données à température ambiante, c'est-à-dire typiquement à 25°C. Une autre façon d'exprimer la distinction faite entre matériau rigide et matériau souple est de dire d'une part qu'un matériau rigide, s'il devait exercer une pression sur la fibre optique comme par exemple la couche tampon qui plaque les fibres optiques nues contre l'élément central de renforcement, dégraderait de manière importante les propriétés de transmission des fibres optiques comme par exemple son atténuation, tandis qu'un matériau souple, lorsqu'il exerce une pression sur la fibre optique comme par exemple la couche tampon qui plaque les fibres optiques nues contre l'élément central de renforcement, ne dégrade pas ou peu les propriétés de transmission des fibres optiques comme par exemple son atténuation. Le matériau souple utilisé pour la couche tampon peut être par exemple de l'HYTREL G3548L (marque déposée) ou de l'HTR 8351 (marque déposée) disponibles chez DU PONT DE NEMOURS (marque déposée).

La gaine extérieure est la dernière couche du câble, celle qui est destinée à être en contact avec le milieu extérieur, c'est généralement une couche de protection mécanique et chimique contre le milieu extérieur au câble c'est-à-dire l'environnement. La couche tampon est une couche jouant souvent le rôle de coussin amortisseur entre la gaine extérieure et les fibres optiques. La gaine extérieure peut éventuellement être réalisée dans le même matériau que la couche tampon, si ledit matériau est adapté à une protection efficace contre l'environnement.

Selon l'invention, il est encore prévu un câble à fibres optiques comportant un élément central de renforcement, une couche de fibres optiques entourant l'élément central de renforcement, une couche tampon entourant la couche de fibres optiques, une gaine extérieure entourant la couche tampon, caractérisé en ce que le câble ne comprend qu'une seule couche de fibres optiques entourant l'élément central de renforcement, en ce que la couche tampon plaque les fibres optiques contre l'élément central de renforcement de manière à coupler mécaniquement les fibres optiques à l'élément central de renforcement par contact entre les fibres optiques nues et l'élément central de renforcement, ledit couplage mécanique réduisant les mouvements longitudinaux relatifs entre les fibres optiques et l'élément central de renforcement lors de variations thermiques du câble, et en ce que la partie de la couche tampon en contact avec les fibres optiques nues est constituée d'un matériau à la fois solide et souple de manière à résister à un écrasement radial sans exercer de contrainte mécanique dommageable sur lesdites fibres optiques.

Le principal intérêt du couplage mécanique est de réduire les mouvements longitudinaux relatifs entre les fibres optiques et l'élément central de renforcement lors de variations thermiques du câble. En effet, lorsque la température du câble varie, la longueur de l'élément central de renforcement varie peu, ce qui permet aux fibres optiques qui lui sont directement couplées mécaniquement de voir leur longueur varier également peu tout en laissant l'élément central de renforcement encaisser l'essentiel des contraintes mécaniques longitudinales. Le couplage mécanique permet également aux fibres optiques de voir leur longueur varier peu tout en encaissant peu les contraintes mécaniques longitudinales, dans le cas d'une traction exercée sur le câble.

La partie de la couche tampon en contact avec les fibres optiques nues est constituée d'un matériau à la fois solide et souple de manière à résister à un écrasement radial sans exercer de contrainte mécanique dommageable sur lesdites fibres optiques. Le matériau de cette partie de couche tampon est solide, ce qui lui permet de résister à un écrasement radial sans se déformer de manière excessive ce qui empêche la contrainte d'écrasement de s'exercer directement sur les fibres optiques nues. Le matériau de cette partie de couche tampon est suffisamment souple pour absorber les contraintes mécaniques dommageables pour les fibres optiques plutôt que de les transmettre aux fibres optiques. Une contrainte mécanique dommageable est une contrainte qui lorsqu'elle s'exerce sur la fibre optique, risque fortement de l'endommager, c'est-à-dire de dégrader ses propriétés optiques de manière sensible ou au-delà de ce que peut tolérer le système d'application dans lequel est utilisé le câble.

Les fibres optiques sont de préférence disposées en hélice ou en SZ autour de l'élément central de renforcement, ce qui leur donne une légère surlongueur améliorant les performances du câble en courbure. De plus, la disposition en hélice ou en SZ permet de mieux plaquer les fibres optiques contre l'élément central de renforcement, sinon dans le cas possible de fibres optiques disposées de manière rectiligne le long de l'élément central de renforcement, tout l'effort de plaquage est à la charge de la couche tampon et ou à la charge d'éventuels moyens de guipage.

La couche tampon est de préférence mécaniquement couplée aux fibres optiques qu'elle entoure, ce qui rend plus solidaire l'ensemble constitué par l'élément central de renforcement, les fibres optiques et la couche tampon, et permet un comportement en extension et en contraction qui soit comparable pour chacun des éléments constituant cet ensemble ; ainsi le câble a un comportement global plus homogène, ce qui constitue une amélioration.

La couche tampon est de préférence essentiellement constituée par un matériau solide et souple comme expliqué ci-dessus. La couche tampon peut aussi comporter d'autres éléments comme des mèches de renfort en matériau solide et rigide. Toutefois, la couche tampon est avantageusement exclusivement constituée par un seul et même matériau qui est ledit matériau solide et souple.

Un matériau souple a un module d'élasticité, encore appelé module d'Young, qui est nettement plus faible que celui d'un matériau rigide. Le matériau souple constituant essentiellement la couche tampon permet aux fibres optiques de subir moins de contraintes mécaniques radiales en provenance du milieu extérieur. Ainsi, l'utilisation d'un matériau souple pour la couche tampon n'ajoute pas ou très peu d'atténuation supplémentaire pour les fibres optiques. Ledit matériau souple est déchirable, il n'empêche donc pas l'accès aux fibres optiques. Ledit matériau solide et souple est par exemple un matériau élastique plein. Ledit matériau solide et souple peut aussi être par exemple une mousse. Ce matériau solide et souple exclut un matériau liquide, visqueux ou pâteux, comme par exemple les graisses remplissant les « loose tube ».

La couche tampon pour être déchirable ne doit pas être trop épaisse. L'épaisseur radiale de la partie de la couche tampon située au-delà du cercle circonscrit à la couche de fibres optiques est suffisamment faible pour que la couche tampon soit facilement déchirable sans outil, c'est-à-dire à mains nues. La couche tampon est facilement déchirable car une déchirure initiée peut être propagée longitudinalement sur une distance importante, par exemple plusieurs mètres, en un mouvement de l'opérateur, permettant ainsi en une opération simple et rapide la mise à nu d'une longueur de fibres optiques qui soit suffisante pour effectuer un raccordement de deux tronçons de câble par exemple. L'accessibilité des fibres optiques est importante notamment dans les réseaux locaux. De plus, ce matériau étant relativement cher, l'extrusion d'une couche tampon de faible épaisseur permet encore de diminuer le coût d'un câble bas coût. Par ailleurs, une couche tampon relativement peu épaisse améliore les performances thermiques du câble car elle permet un comportement du câble qui soit plus homogène en température et plus proche de celui de l'élément central de renforcement. Par conséquent, une épaisseur relativement faible de la couche tampon a un triple avantage : elle facilite l'accès aux fibres optiques, améliore les performances thermiques du câble, diminue aussi bien le diamètre que le coût du câble. Une épaisseur relativement faible de la couche tampon permet donc de réaliser un excellent compromis entre les propriétés de transmission optique, le coût et le caractère pratique d'utilisation en réseaux locaux, du câble à fibres optiques bas coût selon l'invention.

Pour obtenir plus facilement les bonnes propriétés de déchirabilité et de variation de longueur en fonction de la température, l'épaisseur radiale de la partie de la couche tampon située au-delà du cercle circonscrit à la couche de fibres optiques est préférentiellement comprise entre 0.1 mm et 0.5mm et même avantageusement comprise entre 0.15mm et 0.40mm, selon les matériaux utilisés et le nombre de fibres optiques entourant l'élément central de renforcement. Pour diminuer encore plus le diamètre et le coût du câble, il est intéressant de choisir une épaisseur radiale de la partie de la couche tampon située au-delà du cercle circonscrit à la couche de fibres optiques qui soit inférieure au diamètre d'une fibre optique nue, lequel diamètre vaut environ 250 µm. L'épaisseur minimale de la couche tampon n'est en fait limitée que par d'une part la qualité du matériau de la couche tampon devant plaquer les fibres optiques contre l'élément central de renforcement et d'autre part le niveau de contraintes mécaniques radiales susceptible d'être transmises par la gaine extérieure en provenance du milieu extérieur au câble.

L'élément central de renforcement comprend de préférence une âme centrale entourée par un surgainage, le surgainage étant mécaniquement couplé à l'âme centrale par contact avec l'âme centrale, et le module d'élasticité du surgainage étant inférieur au module d'élasticité de l'âme centrale. Le rapport entre le module d'élasticité de l'âme centrale et le module d'élasticité du surgainage est de préférence nettement supérieur à 1, par exemple supérieur à un facteur 10 ou encore supérieur à un facteur 100. En effet, l'âme centrale est relativement rigide et présente souvent un état de surface imparfait, c'est-à-dire légèrement rugueux. Le contact direct entre les fibres optiques et l'âme centrale de l'élément central de renforcement risque d'exercer des contraintes mécaniques du type microcourbures sur les fibres optiques et ainsi de dégrader leurs propriétés de transmission optique, et notamment leur atténuation. Cependant, si le système d'application utilisant le câble autorise une certaine dégradation des propriétés optiques, et ou si l'âme centrale ne présente pas un module d'élasticité trop élevé, et ou si l'état de surface de l'âme centrale est suffisamment lisse, un élément central de renforcement réduit à son âme centrale reste utilisable, l'élément central de renforcement bi-couche comprenant une âme centrale entourée d'un surgainage restant tout de même préféré. Dans ce dernier cas, de préférence, l'âme centrale a un module d'élasticité suffisamment élevé pour encaisser une traction exercée sur le câble, tandis que le surgainage a un module d'élasticité suffisamment faible pour absorber au moins partiellement les contraintes mécaniques radiales exercées par l'âme centrale sur les fibres optiques. Ainsi, l'âme centrale, qui est par exemple constituée de fibres de verre noyées dans de la résine ou d'un barreau de métal, conserve à l'élément central de renforcement toute son efficacité tandis que le surgainage, qui est par exemple un matériau élastique plein ou une mousse et qui peut être le même matériau que celui de la couche tampon, protège les fibres optiques des contraintes mécaniques radiales que pourrait exercer sur elles l'âme centrale de l'élément central de renforcement. Le rapport entre le diamètre de l'âme centrale et l'épaisseur du surgainage est suffisamment élevé pour que le comportement, en réponse à des variations de température du câble, de l'élément central de renforcement soit plus proche de celui de l'âme centrale que de celui du surgainage, ce qui permet un meilleur couplage mécanique entre les fibres optiques et l'âme centrale de l'élément central de renforcement ainsi qu'un bon équilibre dans l'ensemble du câble entre matériaux ayant des variations longitudinales importantes et matériaux ayant des variations longitudinales peu importantes. De préférence, pour un couplage mécanique optimal entre les fibres optiques et l'âme centrale de l'élément central de renforcement, ce qui permet aux fibres optiques d'être couplées mécaniquement avec un matériau ayant un comportement en température comparable au leur, ce qui n'est pas le cas avec le matériau constituant la couche tampon ou le surgainage de l'élément central de renforcement, le rapport entre le diamètre de l'âme centrale et l'épaisseur du surgainage est supérieur à 4. Dans ce qui précède, l'élément central de renforcement a été décrit comme comprenant une âme centrale solide et rigide entourée par un surgainage solide et souple ; de préférence, l'élément central de renforcement est constitué par cette âme centrale entourée par ce surgainage, et ne comprend aucun autre élément.

Pour obtenir un bon couplage mécanique entre l'âme centrale de l'élément central de renforcement et les fibres optiques, surtout lorsque le surgainage n'est pas très mince relativement au diamètre de l'âme centrale, une variante consiste à utiliser des moyens de guipage, telles que mèches de renfort ou ruban séparateur, permettant de plaquer les fibres optiques avec plus de force contre l'élément central de renforcement et permettant de mieux coupler mécaniquement les fibres optiques à l'âme centrale même lorsque le surgainage de l'élément central de renforcement est relativement épais. Par conséquent, de préférence, le câble comporte aussi des moyens de guipage pour renforcer le plaquage des fibres optiques nues contre l'élément central de renforcement. Ces moyens de guipage ne sont toutefois pas indispensables. Avantageusement, ces moyens de guipage sont des mèches de renfort et de guipage disposées en hélice autour de la couche tampon et au contact de la couche tampon. En variante, ces moyens de guipage peuvent aussi être un ruban séparateur disposé en hélice autour de la couche tampon et au contact de la couche tampon. Les mèches de renfort, tout comme le ruban séparateur, ont aussi un rôle de séparateur, c'est-à-dire qu'ils empêchent que, lors de l'extrusion de la gaine extérieure sur la couche tampon, il ne se produise un collage entre gaine extérieure et couche tampon, ce qui rendrait plus difficile la possibilité d'accéder aux fibres optiques sans arracher la couche tampon en même temps que la gaine extérieure.

La couche tampon est en majoritairement en matériau solide et souple. De préférence, aucun élément liquide, visqueux ou pâteux n'est au contact des fibres optiques. Avantageusement, le câble lui-même ne comprend aucun élément liquide, visqueux ou pâteux, c'est alors un câble totalement sec (ou « fully dry » en langue anglo-saxonne), ce qui le rend plus pratique lors de manipulations, notamment lors de raccordements. Dans une variante, un séparateur liquide est disposé à l'interface entre les fibres optiques nues d'une part et l'élément central de renforcement d'autre part en quantité juste suffisante pour empêcher un endommagement des fibres optiques lors de leur assemblage autour de l'élément central de renforcement : cette variante, moins intéressante au niveau de l'aspect manipulation du câble, pourra toutefois être utilisée dans certains cas par exemple lors d'un assemblage du câble à grande vitesse, pour éviter un risque éventuel d'endommagement des fibres optiques lorsqu'elles sont plaquées contre l'élément central de renforcement. Ce séparateur liquide ne doit pas être utilisé en quantité trop grande sous peine de faire disparaître le couplage mécanique entre les fibres optiques et l'élément central de renforcement.

Le procédé de fabrication d'un câble selon l'invention est de préférence extrêmement simple : il peut même consister en une phase extrudant avantageusement à grande vitesse la couche tampon sur les fibres optiques assemblées autour de l'élément central de renforcement, suivie d'une étape d'extrusion avantageusement à grande vitesse de la gaine extérieure sur la couche tampon ; le procédé ne comporte alors avantageusement que deux étapes d'extrusion à grande vitesse.

Dans une variante, la couche de fibres optiques, au lieu d'être uniquement constituée de fibres optiques, comprend des fibres optiques et quelques éléments de remplissage, ce qui permet d'utiliser le même type de structure de câble pour différentes capacités en nombre de fibres optiques. Pour certaines parties du réseau, le rapport entre nombre de fibres optiques incluses dans le câble et diamètre du câble n'est pas optimisé, par contre on peut alors utiliser le même type de câble pour plusieurs tronçons du réseau ayant des capacités différentes en nombre de fibres optiques.

De préférence, dans les applications où le diamètre doit rester spécialement faible, le câble à fibres optiques selon l'invention est constitué, successivement du centre vers la périphérie, d'un élément central de renforcement comprenant une âme centrale entourée par un surgainage, d'une couche de fibres optiques, d'une couche tampon en matériau solide et souple comprenant éventuellement des mèches de renfort, d'éventuelles mèches de guipage pouvant également servir de renforts, d'une gaine extérieure. Ledit câble ne comporte donc aucun autre élément. Les mèches de renforts noyées dans la couche tampon, comme les mèches de guipage situées autour de la couche tampon, ne sont pas obligatoires. Un câble à fibres optiques selon l'invention, optimal au niveau de son faible diamètre et de sa simplicité, est un câble avantageusement constitué, successivement du centre vers la périphérie, d'un élément central de renforcement comprenant une âme centrale entourée par un surgainage, d'une couche de fibres optiques, d'une couche tampon constituée d'un seul et même matériau solide et souple, d'une gaine extérieure. Ledit câble ne comporte aucun autre élément.

Dans certaines artères importantes du réseau, il peut être envisagé d'utiliser des macro-câbles regroupant plusieurs câbles bas coût faible capacité selon l'invention issus d'artères plus petites.

Dans un premier mode de réalisation préférentiel, le câble à fibres optiques selon l'invention comprend au plus 6 fibres optiques et le diamètre extérieur dudit câble est inférieur à 2mm. Le diamètre extérieur du câble vaut par exemple environ 1.7mm.

Le câble comprend 6 éléments disposés autour de l'élément central de renforcement, dont au moins 2 fibres optiques, auquel cas il comprend au plus 4 autres éléments qui sont des éléments de remplissage, et jusqu'à un maximum de 6 fibres optiques, auquel cas il n'y a pas d'autres éléments et par conséquent pas d'éléments de remplissage. Les éléments de remplissage sont de préférence mécaniquement couplés à l'élément central de renforcement, mais ce n'est pas obligatoire. La configuration comprenant une seule fibre optique et 5 éléments de remplissage est théoriquement envisageable mais économiquement peu intéressante, car d'autres solutions existent pour faire passer une seule fibre optique, comme par exemple une fibre optique renforcée comprenant des couches périphériques supplémentaires de protection. Cette dernière solution à une seule fibre optique est de moins en moins intéressante au fur et à mesure que le nombre d'éléments entourant l'élément central de renforcement augmente et que par conséquent le diamètre de l'élément central de renforcement et le diamètre du câble augmentent également.

Dans un deuxième mode de réalisation préférentiel, le câble à fibres optiques selon l'invention comprend au plus 12 fibres optiques et le diamètre extérieur dudit câble est inférieur à 2.5mm. Le diamètre extérieur du câble vaut par exemple environ 2mm. Le câble comprend 12 éléments disposés autour de l'élément central de renforcement, dont au moins 2 fibres optiques, auquel cas il comprend au plus 10 autres éléments qui sont des éléments de remplissage, et jusqu'à un maximum de 12 fibres optiques, auquel cas il n'y a pas d'autres éléments et par conséquent pas d'éléments de remplissage. Les éléments de remplissage sont de préférence mécaniquement couplés à l'élément central de renforcement, mais ce n'est pas obligatoire.

Dans un troisième mode de réalisation préférentiel, le câble à fibres optiques selon l'invention comprend au plus 24 fibres optiques et le diamètre extérieur dudit câble est inférieur à 3.5mm. Le diamètre extérieur du câble vaut par exemple environ 3.2mm. Le câble comprend 24 éléments disposés autour de l'élément central de renforcement, dont au moins 2 fibres optiques, auquel cas il comprend au plus 22 autres éléments qui sont des éléments de remplissage, et jusqu'à un maximum de 24 fibres optiques, auquel cas il n'y a pas d'autres éléments et par conséquent pas d'éléments de remplissage. Les éléments de remplissage sont de préférence mécaniquement couplés à l'élément central de renforcement, mais ce n'est pas obligatoire.

D'autres modes de réalisation, comprenant un autre nombre d'éléments autour de l'élément central de renforcement sont également envisageables, par exemple 8 ou 16 ou 20 ou bien encore d'autres nombres, même impairs.

Le câble à fibres optiques selon l'invention est un câble bas coût au diamètre relativement faible et à la structure relativement simple. Ce câble possède de bonnes performances sauf en environnement très agressif et très exigeant. Ce câble est de préférence destiné à des applications de type métro, c'est-à-dire dans les réseaux locaux, par opposition à des applications de type transmission à longue distance. Ce câble peut avantageusement être utilisé comme câble de distribution, alimentant par exemple un quartier de ville ou un groupe d'immeubles, ce câble sera alors par exemple disposé en boucle sur une partie de sa longueur. Ce câble peut avantageusement être également utilisé comme câble d'accès, alimentant par exemple un immeuble ou à la rigueur une habitation individuelle.

L'invention sera mieux comprise et d'autres particularités et avantages apparaîtront à l'aide de la description ci-après et des dessins joints, donnés à titre d'exemples, où :

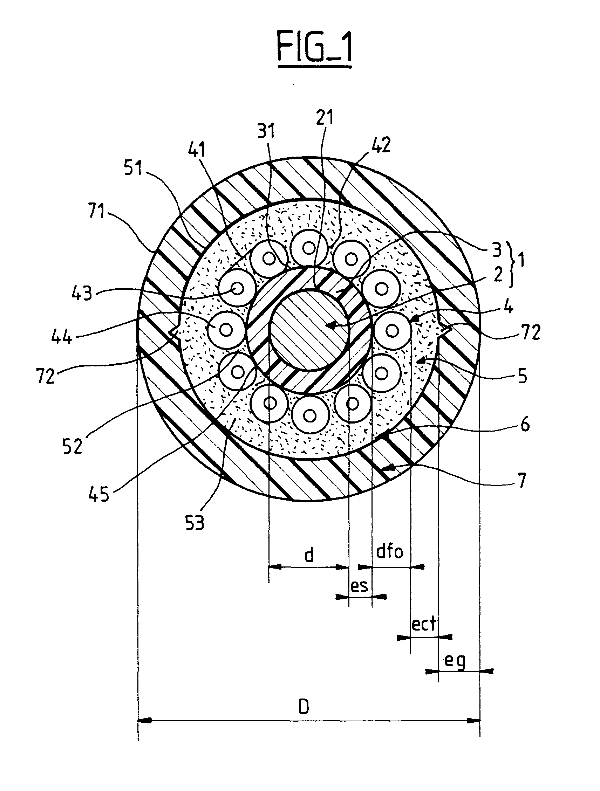

- la figure 1 représente schématiquement une section transversale d'un exemple de câble à fibres optiques selon l'invention.

La figure 1 représente schématiquement une section transversale d'un exemple de câble à fibres optiques selon l'invention. Une élément central de renforcement 1 est constitué d'un âme centrale 2 et d'un surgainage 3. L'âme centrale 2 a un diamètre d et une surface extérieure 21. Le surgainage 3 entoure l'âme centrale 2. Le surgainage 3 est en contact direct avec l'âme centrale 2 au niveau de la surface 21. Le surgainage 3 est mécaniquement couplé à l'âme centrale 2. Le surgainage 3 a une épaisseur es et une surface extérieure 31.

Une couche unique annulaire de fibres optiques 4 entoure le surgainage 3. Les fibres optiques sont constituées d'une part d'une âme optique 43 comprenant un coeur et une gaine et d'autre part d'un ou de plusieurs revêtements 44 appliqués lors du fibrage. Les fibres optiques 4 constituées de leurs âmes optiques 43 et de leurs revêtements 44 sont des fibres optiques nues. Le diamètre des fibres optiques 4 nues est noté dfo. Les fibres optiques 4 sont en contact avec le surgainage 3 au niveau de la surface 31 en des points de contact 45. Les fibres optiques 4 nues sont mécaniquement couplés au surgainage 3 lui-même mécaniquement couplé à l'âme centrale 2, par conséquent les fibres optiques 4 nues sont mécaniquement couplées à l'âme centrale 2. Sur la figure 1, la surface 31 se présente comme un cercle ; dans la réalité, afin d'obtenir un meilleur couplage mécanique entre l'élément central de renforcement 1 et les fibres optiques 4, et plus précisément entre l'âme centrale 2 et les fibres optiques 4, les fibres optiques 4 sont plaquées avec force contre le surgainage 3 et donc s'enfoncent un peu dans le surgainage 3 lequel présente alors de légers creux au niveau des zones de contact avec les fibres optiques 4. Les fibres optiques 4 peuvent se toucher toutes entre elles au niveau des surfaces de contact 42, elles peuvent aussi être légèrement espacées les unes des autres, auquel cas les interstices 42 créés seraient avantageusement remplis par le matériau de la couche tampon 5. L'important, si les fibres optiques se touchent, est qu'elles n'exercent pas les unes sur les autres de contraintes mécaniques dommageables pour leurs propriétés de transmission optique et en particulier leur atténuation. Le cercle circonscrit aux fibres optiques 4 est représenté par la portion de cercle 41.

Une couche tampon 5 entoure les fibres optiques 4. La couche tampon 5 est en contact avec les fibres optiques 4. La couche tampon 5 plaque les fibres optiques 4 contre le surgainage 3. La couche tampon 5 enrobe au moins partiellement les fibres optiques 4 nues en remplissant tout ou partie des interstices 53 situés entre la couche tampon 5 et les fibres optiques 4. Les interstices 52 situés entre le surgainage 3 et les fibres optiques 4 peuvent aussi être remplis par le matériau de la couche tampon 4, mais ils ne font à proprement parler plus partie de la couche tampon 4 laquelle entoure la couche des fibres optiques 4. Remplir tous les interstices est intéressant pour des raisons d'amélioration de l'étanchéité du câble ; en variante non préférée, les interstices 52 pourraient être remplis par une graisse usuelle absorbant l'hydrogène, mais le câble présenterait alors l'inconvénient de n'être pas entièrement sec. L'épaisseur radiale de la couche tampon située au-delà du cercle 41 circonscrit à la couche de fibres optiques 4 est notée ect : on parlera communément plus simplement d'épaisseur de la couche tampon. La couche tampon 5 a une surface extérieure 51. Au niveau de cette surface extérieure 51, peuvent se trouver des mèches 6 de renfort et de guipage. Ces mèches 6 sont fines, entourés en hélice ou en SZ autour de la couche tampon 5 : elles ne sont pas visibles sur la figure 1, seul leur emplacement est montré par la référence 6. Un simple ruban séparateur 6 entouré de la même manière peut remplacer les mèches 6. Le ruban 6 remplit alors les mêmes fonctions de séparation et éventuellement de guipage, mais plus celle de renforcement.

La couche tampon 5, et le cas échéant les mèches 6, sont entourées par une gaine extérieure 7. La gaine extérieure 7 est en contact avec la couche tampon 5 au niveau de la surface 51. La surface extérieure 71 de la gaine extérieure 7 est destinée à être en contact avec le milieu extérieur au câble. La gaine extérieure 7 présente une épaisseur eg. Le diamètre de la surface extérieure 71 de la gaine extérieure 7 correspond au diamètre D du câble. La gaine extérieure 7 comprend deux encoches 72 symétriquement disposées afin d'améliorer le caractère déchirable de la gaine extérieure 7.

Sur la figure 1, les proportions entre les différentes éléments sont conservées. Le diamètre dfo des fibres optiques 4 nues est normalisé à environ 250µm. Le diamètre D de ce câble à 12 fibres optiques vaut environ 2.1mm. Le diamètre d de l'âme centrale 2 vaut environ 4 fois l'épaisseur es du surgainage 3. L'épaisseur du surgainage 3 vaut environ 0.12mm. L'épaisseur ect de la couche tampon vaut environ 0.12mm. L'épaisseur eg de la gaine extérieure 7 vaut environ 0.25mm.

## Revendications

1. Câble à fibres optiques comportant
un élément central de renforcement (1),
une couche de fibres optiques (4) entourant l'élément central de renforcement (1),
une couche tampon (5) entourant la couche de fibres optiques (4),
une gaine extérieure (7) entourant la couche tampon (5),
**caractérisé en ce que** le câble ne comprend qu'une seule couche de fibres optiques (4) entourant l'élément central de renforcement (1),
**en ce que** la couche tampon (7) plaque les fibres optiques (4) nues en contact contre l'élément central de renforcement (1) de manière à les coupler mécaniquement à l'élément central de renforcement (1),
et **en ce que** la couche tampon (5) est constituée, majoritairement en volume, d'un matériau à la fois solide et souple.

2. Câble à fibres optiques comportant
un élément central de renforcement (1),
une couche de fibres optiques (4) entourant l'élément central de renforcement (1),
une couche tampon (5) entourant la couche de fibres optiques (4),
une gaine extérieure (7) entourant la couche tampon (5),
**caractérisé en ce que** le câble ne comprend qu'une seule couche de fibres optiques (4) entourant l'élément central de renforcement (1),
**en ce que** la couche tampon (5) plaque les fibres optiques (4) contre l'élément central de renforcement (1) de manière à coupler mécaniquement les fibres optiques (4) à l'élément central de renforcement (1) par contact entre les fibres optiques (4) nues et l'élément central de renforcement (1), ledit couplage mécanique réduisant les mouvements longitudinaux relatifs entre les fibres optiques (4) et l'élément central de renforcement (1 ) lors de variations thermiques du câble,
et **en ce que** la partie de la couche tampon (5) en contact avec les fibres optiques (4) nues est constituée d'un matériau à la fois solide et souple de manière à résister à un écrasement radial sans exercer de contrainte mécanique dommageable sur lesdites fibres optiques (4).

3. Câble à fibres optiques selon l'une quelconque des revendications 1 à 2, **caractérisé en ce que** la couche tampon (5) est mécaniquement couplée aux fibres optiques (4) qu'elle entoure.

4. Câble à fibres optiques selon l'une quelconque des revendications 1 à 3, **caractérisé en ce que** le câble comporte des mèches (6) de renfort et de guipage disposées en hélice autour de la couche tampon (5) et au contact de la couche tampon (5).

5. Câble à fibres optiques selon l'une quelconque des revendications 1 à 3, **caractérisé en ce que** le câble comporte un ruban séparateur (6) disposé en hélice autour de la couche tampon (5) et au contact de la couche tampon (5).

6. Câble à fibres optiques selon l'une quelconque des revendications 1 à 5, **caractérisé en ce que** le matériau solide et souple de la couche tampon (5) a un module d'Young à 25°C qui est inférieur à 150 MPa.

7. Câble à fibres optiques selon la revendication 6, **caractérisé en ce que** le matériau solide et souple de la couche tampon (5) a un module d'Young à 25°C qui est inférieur à 100 MPa.

8. Câble à fibres optiques selon l'une quelconque des revendications 6 à 7, **caractérisé en ce que** le matériau solide et souple de la couche tampon (5) est un matériau élastique plein.

9. Câble à fibres optiques selon l'une quelconque des revendications 6 à 7, **caractérisé en ce que** le matériau solide et souple de la couche tampon (5) est une mousse.

10. Câble à fibres optiques selon l'une quelconque des revendications 1 à 9, **caractérisé en ce que** la couche tampon (5) est exclusivement constituée par un seul et même matériau.

11. Câble à fibres optiques selon l'une quelconque des revendications 1 à 10, **caractérisé en ce que** l'épaisseur radiale (ect) de la partie de la couche tampon (5) située au-delà du cercle circonscrit (41) à la couche de fibres optiques (4) est suffisamment faible pour que la couche tampon (5) soit facilement déchirable sans outil.

12. Câble à fibres optiques selon la revendication 11, **caractérisé en ce que** l'épaisseur radiale (ect) de la partie de la couche tampon (5) située au-delà du cercle circonscrit (41) à la couche de fibres optiques (4) est comprise entre 0.1 mm et 0.5mm.

13. Câble à fibres optiques selon la revendication 12, **caractérisé en ce que** l'épaisseur radiale (ect) de la partie de la couche tampon (5) située au-delà du cercle circonscrit (41) à la couche de fibres optiques (4) est comprise entre 0.15mm et 0.40mm.

14. Câble à fibres optiques selon l'une quelconque des revendications 11 à 13, **caractérisé en ce que** l'épaisseur radiale (ect) de la partie de la couche tampon (5) située au-delà du cercle circonscrit (41) à la couche de fibres optiques (4) est inférieure au diamètre (dfo) d'une fibre optique (4) nue.

15. Câble à fibres optiques selon l'une quelconque des revendications 1 à 14, **caractérisé en ce que** la couche de fibres optiques (4) comprend des fibres optiques et quelques éléments de remplissage.

16. Câble à fibres optiques comportant un élément central de renforcement (1), plusieurs fibres optiques (4) entourant l'élément central de renforcement (1), **caractérisé en ce que** les fibres optiques (4) nues sont plaquées en contact contre l'élément central de renforcement (1) de manière à être mécaniquement couplées à l'élément central de renforcement (1).

17. Câble à fibres optiques selon l'une quelconque des revendications 1 à 16, **caractérisé en ce que** les fibres optiques (4) sont disposées en hélice ou en SZ autour de l'élément central de renforcement (1).

18. Câble à fibres optiques selon l'une quelconque des revendications 1 à 17, **caractérisé en ce que** l'élément central de renforcement (1) comprend une âme centrale (2) entourée par un surgainage (3), **en ce que** le surgainage (3) est mécaniquement couplé à l'âme centrale (2) par contact avec l'âme centrale (2), et **en ce que** le module d'élasticité du surgainage (3) est inférieur au module d'élasticité de l'âme centrale (2).

19. Câble à fibres optiques selon la revendication 18, **caractérisé en ce que** l'âme centrale (2) a un module d'élasticité suffisamment élevé pour encaisser une traction exercée sur le câble, et **en ce que** le surgainage (3) a un module d'élasticité suffisamment faible pour absorber au moins partiellement les contraintes mécaniques radiales exercées par l'âme centrale (2) sur les fibres optiques (4).

20. Câble à fibres optiques selon l'une quelconque des revendications 18 à 19, **caractérisé en ce que** le rapport entre le diamètre (d) de l'âme centrale (2) et l'épaisseur (es) du surgainage (3) est suffisamment élevé pour que le comportement, en réponse à des variations de température du câble, de l'élément central de renforcement (1) soit plus proche de celui de l'âme centrale (2) que de celui du surgainage (3).

21. Câble à fibres optiques selon la revendication 20, **caractérisé en ce que** le rapport entre le diamètre (d) de l'âme centrale (2) et l'épaisseur (es) du surgainage (3) est supérieur à 4.

22. Câble à fibres optiques selon l'une quelconque des revendications 1 à 17, **caractérisé en ce que** le câble comporte aussi des moyens (6) de guipage pour renforcer le plaquage des fibres optiques (4) nues contre l'élément central de renforcement (1 ).

23. Câble à fibres optiques selon l'une quelconque des revendications 1 à 22, **caractérisé en ce qu'**aucun élément liquide, visqueux ou pâteux n'est au contact des fibres optiques (4).

24. Câble à fibres optiques selon la revendication 23, **caractérisé en ce que** le câble ne comprend aucun élément liquide, visqueux ou pâteux.

25. Câble à fibres optiques selon l'une quelconque des revendications 1 à 22, **caractérisé en ce qu'**un séparateur liquide est disposé à l'interface entre les fibres optiques (4) nues d'une part et l'élément central de renforcement (1) d'autre part en quantité juste suffisante pour empêcher un endommagement des fibres optiques (4) lors de leur assemblage autour de l'élément central de renforcement (1).

26. Câble à fibres optiques selon l'une quelconque des revendications 1 à 25, **caractérisé en ce que** le câble est constitué, successivement du centre vers la périphérie, d'un élément central de renforcement (1) comprenant une âme centrale (2) entourée par un surgainage (3), d'une couche de fibres optiques (4), d'une couche tampon (5) en matériau solide et souple comprenant éventuellement des mèches de renfort, d'éventuelles mèches (6) de guipage pouvant également servir de renforts, d'une gaine extérieure (7).

27. Câble à fibres optiques selon l'une quelconque des revendications 1 à 25, **caractérisé en ce que** le câble est constitué, successivement du centre vers la périphérie, d'un élément central de renforcement (1) comprenant une âme centrale (2) entourée par un surgainage (3), d'une couche de fibres optiques (4), d'une couche tampon (5) constituée d'un seul et même matériau solide et souple, d'une gaine extérieure (7).

28. Câble à fibres optiques selon l'une quelconque des revendications 1 à 27, **caractérisé en ce que** le câble comprend au plus 6 fibres optiques (4), et **en ce que** le diamètre extérieur (D) du câble est inférieur à 2mm.

29. Câble à fibres optiques selon l'une quelconque des revendications 1 à 27, **caractérisé en ce que** le câble comprend au plus 12 fibres optiques (4), et **en ce que** le diamètre extérieur (D) du câble est inférieur à 2.5mm.

30. Câble à fibres optiques selon l'une quelconque des revendications 1 à 27, **caractérisé en ce que** le câble comprend au plus 24 fibres optiques (4), et **en ce que** le diamètre extérieur (D) du câble est inférieur à 3.5mm.

31. Câble à fibres optiques selon l'une quelconque des revendications 1 à 30, **caractérisé en ce que** le câble est un câble de distribution.

32. Câble à fibres optiques selon l'une quelconque des revendications 1 à 30, **caractérisé en ce que** le câble est un câble d'accès.
